# FASCICULE DE BREVET EUROPEEN

(11) **EP 4 321 438 B1**
(45) Date de publication et mention de la délivrance du brevet: **03.09.2025**
(21) Numéro de dépôt: 23188280.4
(22) Date de dépôt: 28.07.2023
(51) Int. Cl.: B64D 37/04, F17C 13/08

(54) **AÉRONEF COMPORTANT UNE STRUCTURE, UN RÉSERVOIR ET DES MOYENS DE FIXATION DU RÉSERVOIR À LA STRUCTURE**
FLUGZEUG MIT EINER STRUKTUR, EINEM TANK UND MITTELN ZUR BEFESTIGUNG DES TANKS AN DER STRUKTUR
AIRCRAFT COMPRISING A STRUCTURE, A TANK AND MEANS FOR ATTACHING THE TANK TO THE STRUCTURE

(30) Priorité: 02.08.2022 FR 2208023
(43) Date de publication de la demande: 14.02.2024
(73) Titulaire: AIRBUS OPERATIONS, 31060 Toulouse Cedex 9 (FR)
(72) Inventeur: MERTES, Anthony, 31060 TOULOUSE (FR)
(74) Mandataire: Cabinet Le Guen Maillet

(56) Documents cités:
- EP-A1- 3 750 811
- EP-B1- 4 144 647
- FR-A1- 3 001 714
- FR-A1- 3 097 201
- US-A- 3 659 817
- US-A- 3 979 005

## Description

### DOMAINE TECHNIQUE

La présente invention concerne un aéronef comportant une structure, un réservoir, en particulier un réservoir de dihydrogène, et des moyens de fixation qui assurent la fixation du réservoir à la structure.

### ÉTAT DE LA TECHNIQUE ANTÉRIEURE

Dans le cas du kérosène qui est utilisé pour alimenter les moteurs d'un aéronef, il est connu d'agencer le réservoir de kérosène dans une aile de l'aéronef.

Afin de réduire la consommation de kérosène dans les moteurs d'aéronef, il est connu d'utiliser le dihydrogène comme carburant. Le réservoir qui est de forme cylindrique ne peut pas être mis dans les ailes et il est alors disposé dans le fuselage de l'aéronef.

L'aéronef comporte alors une structure à laquelle le réservoir est fixé par des moyens de fixation. Le document FR3001714A1 divulgue un dispositif de support et de maintien d'un réservoir dans un aéronef.

Actuellement, les moyens de fixation ne sont pas optimisés et il est donc nécessaire de trouver un nouvel arrangement.

### EXPOSE DE L'INVENTION

Un objet de la présente invention est de proposer un aéronef comportant une structure, au moins un réservoir cylindrique et des moyens de fixation qui assurent la fixation de chaque réservoir à la structure.

À cet effet, est proposé un aéronef comportant :
- un fuselage avec une structure,
- au moins un réservoir logé dans le fuselage, et présentant un plan médian longitudinal vertical,
- pour chaque réservoir, des moyens de fixation qui assurent la fixation du réservoir à la structure où les moyens de fixation comportent :
   - un système avant de fixation comportant :
   - une palette avant solidaire de la structure,
   - de part et d'autre du plan médian longitudinal vertical du réservoir, une bielle latérale fixée de manière articulée par un premier point de liaison à la palette avant et par un deuxième point de liaison au réservoir, et
   - au niveau du plan médian longitudinal vertical du réservoir, une bielle centrale fixée de manière articulée par un premier point de liaison à la palette avant et de manière articulée par un deuxième point de liaison au réservoir,
   - un système arrière de fixation comportant :
   - une palette arrière solidaire de la structure, et
   - une bielle arrière fixée de manière articulée par un premier point de liaison à la palette arrière au niveau du plan médian longitudinal vertical du réservoir et au réservoir par deux deuxièmes points de liaison disposés de part et d'autre du plan médian longitudinal vertical du réservoir, et
   - un système latéral de fixation comportant une bielle latérale fixée de manière articulée par un premier point de liaison à la structure et par un deuxième point de liaison au réservoir où l'un des points de liaison est derrière l'autre point de liaison.

Un tel arrangement permet d'avoir des moyens de fixation qui sont optimisés en particulier pour le transfert des efforts du réservoir vers la structure.

Avantageusement, chaque bielle est doublée.

Avantageusement, au moins une bielle latérale et la bielle centrale du système avant de fixation comportent un point de liaison supplémentaire entre la palette avant et la bielle considérée, où le point de liaison supplémentaire est activé en cas de défaillance d'un chemin primaire d'efforts et crée un chemin auxiliaire d'efforts entre la structure et le réservoir, et où chaque point de liaison supplémentaire est constitué d'une chape réalisée dans la bielle ou la paire de bielles considérée et d'un axe emmanché dans des alésages de ladite chape et qui traverse un alésage de la palette avant dont le diamètre est supérieur au diamètre de l'axe. Avantageusement, la bielle arrière du système arrière de fixation comporte un point de liaison supplémentaire entre la bielle arrière et le réservoir, où le point de liaison supplémentaire est activé en cas de défaillance d'un chemin primaire d'efforts et crée un chemin auxiliaire d'efforts entre la structure et le réservoir et où le point de liaison supplémentaire est constitué d'une chape réalisée dans la bielle arrière ou la paire de bielles arrière et d'un axe emmanché dans des alésages de ladite chape et qui traverse un alésage du réservoir dont le diamètre est supérieur au diamètre de l'axe.

Avantageusement, la palette avant est doublée.

Avantageusement, la palette arrière est doublée.

Avantageusement, chaque système avant de fixation est fixé au niveau d'une poutre avant de la structure, chaque système arrière de fixation est fixé au niveau d'une poutre arrière de la structure, pour chaque poutre, la structure comporte un arceau où la poutre est fixée horizontalement le long d'une corde dudit arceau, et, pour chaque poutre, l'aéronef comporte une barre en V dont la pointe est fixée de manière articulée à la poutre et dont l'extrémité de chaque branche est fixée de manière articulée à l'arceau.

### BRÈVE DESCRIPTION DES DESSINS

Les caractéristiques de l'invention mentionnées ci-dessus, ainsi que d'autres, apparaîtront plus clairement à la lecture de la description suivante d'un exemple de réalisation, ladite description étant faite en relation avec les dessins joints, parmi lesquels :
Fig. 1 est une vue de côté d'un aéronef selon l'invention,
Fig. 2 est une vue en perspective de deux réservoirs et des moyens de fixation,
Fig. 3 est une vue en perspective des moyens de fixation avant,
Fig. 4 est une vue en perspective des moyens de fixation arrière, et
Fig. 5 est une vue de dessus d'un réservoir et des moyens de fixation latérale.

### EXPOSÉ DÉTAILLÉ DE MODES DE RÉALISATION

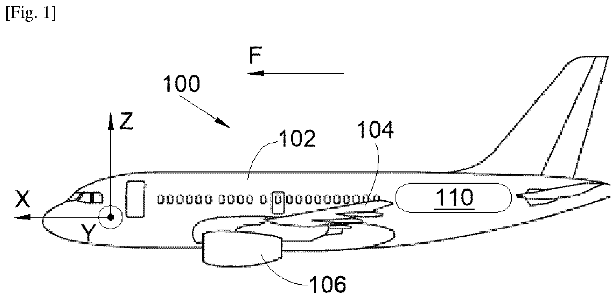

Dans la description qui suit, les termes relatifs à une position sont pris en référence à un aéronef en position normale de vol, c'est-à-dire tel que représenté sur la Fig. 1. La flèche F indique la direction en marche avant de l'aéronef 100.

Dans la description qui suit, et par convention, on appelle X la direction longitudinale de l'aéronef, on appelle Y la direction transversale qui est horizontale lorsque l'aéronef est au sol, et Z la direction verticale qui est verticale lorsque l'aéronef est au sol, ces trois directions X, Y et Z étant orthogonales entre elles.

La Fig. 1 montre un aéronef 100 qui comporte un fuselage 102 de chaque côté duquel est fixée une aile 104 qui porte au moins un moteur 106 fonctionnant avec du carburant comme le dihydrogène ou le kérosène.

Le carburant est stocké dans au moins un réservoir 110 qui est logé et fixé à l'intérieur du fuselage 102 et ici à l'arrière du fuselage 102.

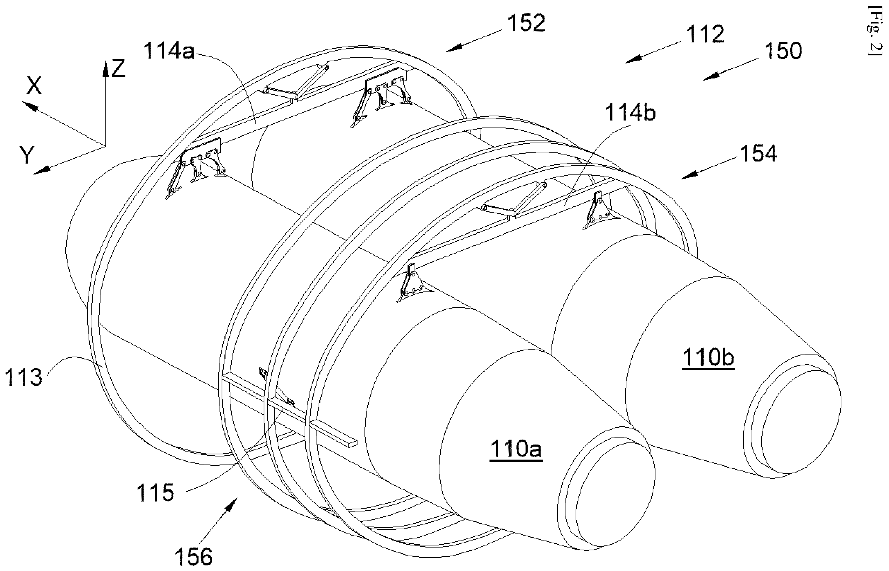

La Fig. 2 montre un mode de réalisation dans lequel il y a deux réservoirs 110a-b disposés de part et d'autre du plan médian XZ de l'aéronef 100, mais selon un autre mode de réalisation non représenté, il y a un seul réservoir 110 arrangé au milieu au niveau du plan médian XZ.

Chaque réservoir 110a-b prend ici une forme allongée à section circulaire, mais des sections différentes comme par exemple rectangulaires, carrées ou autres sont possibles.

Le fuselage 102 de l'aéronef 100 comporte une structure 112 qui est constituée ici d'arceaux 113 sur l'extérieur desquels est fixée la peau du fuselage 102, de poutres 114a-b, ici horizontales et transversales, où chacune est fixée à un arceau 113 et une poutrelle 115, ici horizontale et longitudinale qui est fixée à plusieurs arceaux 113. Dans le mode de réalisation de l'invention présenté sur la Fig. 2, les poutres 114a-b et les arceaux 113 sont communs aux deux réservoirs 110a-b et il y a une poutrelle 115 pour chaque réservoir 110a-b. La poutrelle 115 pour le réservoir 110b est ici cachée par ledit réservoir 110b et se trouve à tribord. Les poutres 114a-b sont au-dessus des réservoirs 110a-b. Il y a ici une poutre avant 114a et une poutre arrière 114b qui est à l'arrière par rapport à la poutre avant 114a.

Pour fixer chaque réservoir 110a-b à la structure 112, l'aéronef 100 comporte des moyens de fixation 150 qui comportent un système avant de fixation 152, un système arrière de fixation 154 et un système latéral de fixation 156.

La description qui suit est faite pour un seul réservoir 110a mais elle s'applique de la même manière à chaque réservoir 110a-b.

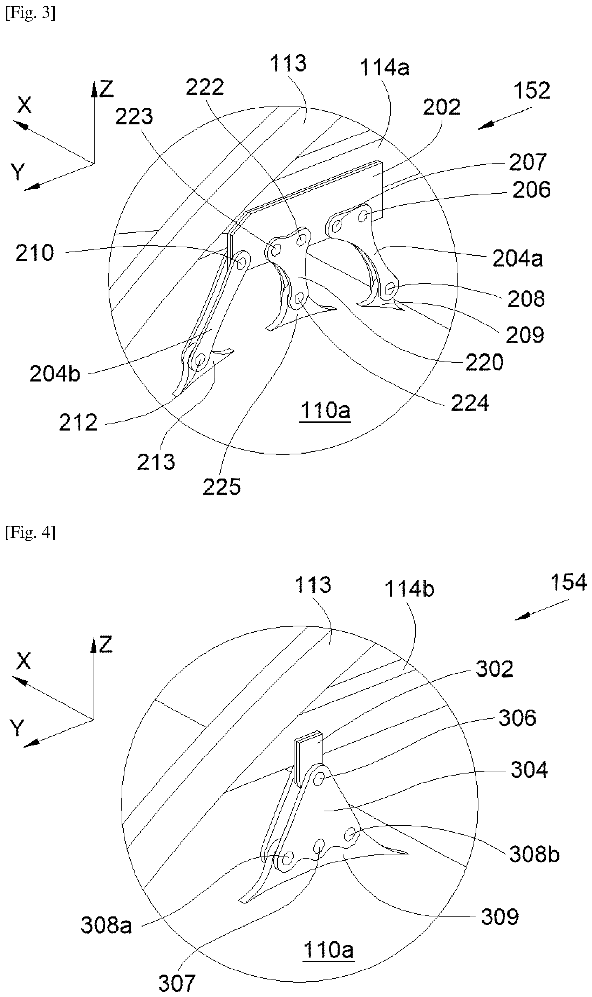

La Fig. 3 montre le système avant de fixation 152 qui est fixé entre une partie haute du réservoir 110a et la structure 112, ici par l'intermédiaire de la poutre avant 114a. Le réservoir 110a est suspendu sous la structure 112.

Le système avant de fixation 152 comporte une palette avant 202 solidaire de la structure 112, ici de la poutre avant 114a. La palette avant 202 s'étend dans un plan transversal vertical perpendiculaire à la direction longitudinale X. La fixation de la palette avant 202 est réalisée par tous moyens appropriés comme des systèmes vis/écrou, des rivets, des soudures, ...

De part et d'autre d'un plan médian longitudinal vertical du réservoir 110a, le système avant de fixation 152 comporte une bielle latérale 204a-b. Le plan médian longitudinal vertical du réservoir 110a est parallèle au plan médian XZ de l'aéronef 100.

Dans le mode de réalisation de l'invention présenté ici, la première bielle latérale 204a est fixée de manière articulée par un premier point de liaison 206 à la palette avant 202 et par un deuxième point de liaison 208 au réservoir 110a qui comporte une première oreille 209 prévue à cet effet, et la deuxième bielle latérale 204b est fixée de manière articulée par un premier point de liaison 210 à la palette avant 202 et par un deuxième point de liaison 212 au réservoir 110a qui comporte une deuxième oreille 213 prévue à cet effet.

Le système avant de fixation 152 comporte au niveau du plan médian longitudinal vertical du réservoir 110a, une bielle centrale 220 arrangée entre les bielles latérales 204a-b. La bielle centrale 220 est fixée de manière articulée par un premier point de liaison 222 à la palette avant 202 et de manière articulée par un deuxième point de liaison 224 au réservoir 110a qui comporte une oreille centrale 225 prévue à cet effet.

Chaque bielle latérale 204a-b et la bielle centrale 220 sont suspendues sous la palette avant 202 et le réservoir 110a est suspendu sous chaque bielle latérale 204a-b et la bielle centrale 220.

Pour des raisons de sécurité, chaque bielle latérale 204a-b et la bielle centrale 220 sont doublées et les bielles d'une paire de bielles sont disposées de part et d'autre de la palette avant 202 et des oreilles 209, 213 et 225, c'est-à-dire devant et derrière. Chaque paire de bielles forme ainsi une chape dans laquelle la palette avant 202 et les oreilles 209, 213 et 225 sont disposées. Un arrangement inverse est également possible, où les oreilles 209, 213 et 225 et la palette avant 202 forment chacune une chape dans laquelle la bielle ou la paire de bielles associée est logée.

La fixation au niveau de chaque point de liaison 206, 208, 210, 212, 222, 224 est préférentiellement une liaison rotule ou au moins une liaison pivot autour d'un axe de rotation parallèle à la direction longitudinale X. Au niveau de chaque point de liaison 206, 208, 210, 212, 222, 224, un axe traverse les alésages des bielles, des oreilles et de la palette avant.

La palette avant 202 et chaque bielle 204a-b, 220 définissent, en combinaison à travers les points de liaison 206, 208, 210, 212, 222 et 224, un chemin primaire d'efforts entre la structure 112 et le réservoir 110a.

Un tel système avant de fixation 152 assure un transfert des charges selon la direction transversale Y, selon la direction verticale Z et un transfert des moments autour de la direction longitudinale X.

Pour une meilleure sécurité, au moins une bielle latérale 204a et la bielle centrale 220 comportent un point de liaison supplémentaire 207, 223 qui assure une liaison supplémentaire entre la palette avant 202 et la bielle 204a, 220 considérée. Chaque point de liaison supplémentaire 207, 223 prend la forme d'un point de fixation de sécurité en attente (dit « waiting fail-safe » en langue anglo-saxonne) qui compense une défaillance du chemin primaire d'efforts, c'est-à-dire d'au moins une des bielles. C'est-à-dire que lorsqu'un composant du chemin primaire d'efforts est endommagé, l'activation d'un point de fixation de sécurité en attente crée un chemin auxiliaire d'efforts entre la structure 112 et le réservoir 110a.

Chaque point de liaison supplémentaire 207, 223 est constitué ici d'une chape réalisée dans la bielle ou la paire de bielles 204a, 220 considérée et d'un axe emmanché dans des alésages de ladite chape et qui traverse un alésage de la palette avant 202 dont le diamètre est supérieur au diamètre de l'axe. Ainsi, en fonctionnement normal, il n'y a aucun contact entre l'axe et la palette avant 202, et en cas de rupture de l'une des bielles, le réservoir 110a va se déplacer et l'axe vient alors en contact avec la palette avant 202.

La Fig. 4 montre le système arrière de fixation 154 qui est fixé entre une partie haute du réservoir 110a et la structure 112, ici par l'intermédiaire de la poutre arrière 114b. Le réservoir 110a est suspendu sous la structure 112.

Le système arrière de fixation 154 comporte une palette arrière 302 solidaire de la structure 112, ici de la poutre arrière 114b. La palette arrière 302 s'étend dans un plan transversal vertical perpendiculaire à la direction longitudinale X. La fixation de la palette arrière 302 est réalisée par tous moyens appropriés comme des systèmes vis/écrou, des rivets, des soudures, ...

Le système arrière de fixation 154 comporte une bielle arrière 304 fixée de manière articulée par un premier point de liaison 306 à la palette arrière 302 au niveau du plan médian longitudinal vertical du réservoir 110a et par deux deuxièmes points de liaison 308a-b au réservoir 110a qui comporte une oreille arrière 309 prévue à cet effet. Les deux deuxièmes points de liaison 308a-b sont disposés symétriquement de part et d'autre du plan médian longitudinal vertical du réservoir 110a.

La bielle arrière 304 est suspendue sous la palette arrière 302 et le réservoir 110a est suspendu sous la bielle arrière 304.

Pour des raisons de sécurité, la bielle arrière 304 est doublée et les bielles 304 sont disposées de part et d'autre de la palette arrière 302 et de l'oreille arrière 309, c'est-à-dire devant et derrière. La paire de bielles arrière 304 forment ainsi une chape dans laquelle la palette arrière 302 et l'oreille 309 sont disposées. Un arrangement inverse est également possible, où l'oreille 309 et la palette arrière 302 forment chacune une chape dans laquelle la bielle arrière 304 ou la paire de bielles arrière 304 associée est logée.

La fixation au niveau de chaque point de liaison 306, 308a-b est préférentiellement une liaison rotule ou au moins une liaison pivot autour d'un axe de rotation parallèle à la direction longitudinale X. Au niveau de chaque point de liaison 306, 308a-b, un axe traverse les alésages des bielles, des oreilles et de la palette arrière.

La palette arrière 302 et la bielle arrière 304 définissent, en combinaison à travers les points de liaison 306 et 308a-b, un chemin primaire d'efforts entre la structure 112 et le réservoir 110a.

Un tel système arrière de fixation 154 assure un transfert des charges selon la direction transversale Y et selon la direction verticale Z.

Pour une meilleure sécurité, la bielle arrière 304 comporte un point de liaison supplémentaire 307 qui assure une liaison supplémentaire entre la bielle arrière 304 et le réservoir 110a. Le point de liaison supplémentaire 307 prend la forme d'un point de fixation de sécurité en attente (dit « waiting fail-safe » en langue anglo-saxonne) qui compense une défaillance du chemin primaire d'efforts, c'est-à-dire de la bielle arrière 304. C'est-à-dire que lorsqu'un composant du chemin primaire d'efforts est endommagé, l'activation du point de fixation de sécurité en attente crée un chemin auxiliaire d'efforts entre la structure 112 et le réservoir 110a.

Le point de liaison supplémentaire 307 est constitué ici d'une chape réalisée dans la bielle arrière 304 ou la paire de bielles arrière 304 et d'un axe emmanché dans des alésages de ladite chape et qui traverse un alésage de l'oreille arrière 309 dont le diamètre est supérieur au diamètre de l'axe. Ainsi, en fonctionnement normal, il n'y a aucun contact entre l'axe et l'oreille arrière 309, et en cas de rupture de la bielle arrière 304, le réservoir 110a va se déplacer et l'axe vient alors en contact avec l'oreille arrière 309.

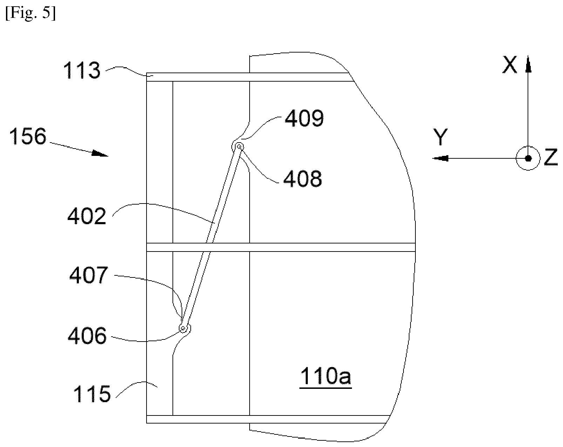

La Fig. 5 montre le système latéral de fixation 156 qui est ici sur un côté du réservoir 110a. En fonction de l'encombrement autour du réservoir 110a, le système latéral de fixation 156 peut être positionné ailleurs autour du réservoir 110a, par exemple en-dessous.

Le système latéral de fixation 156 est fixé entre le réservoir 110a et la structure 112, ici par l'intermédiaire de la poutrelle 115.

Le système latéral de fixation 156 comporte une bielle latérale 402 fixée de manière articulée par un premier point de liaison 406 à la structure 112, ici à la poutrelle 115, qui comporte une première oreille 407 prévue à cet effet et par un deuxième point de liaison 408 au réservoir 110a qui comporte une deuxième oreille 409 prévue à cet effet. Les deux points de liaison 406 et 408 sont décalés l'un par rapport à l'autre le long de la direction longitudinale X, c'est-à-dire que l'un des points de liaison (ici 406) est derrière l'autre point de liaison (ici 408).

La fixation au niveau de chaque point de liaison 406, 408 est préférentiellement une liaison rotule ou au moins une liaison pivot. Au niveau de chaque point de liaison 406, 408, un axe traverse les alésages de la bielle latérale 402 et des oreilles 407 et 409.

Un tel système latéral de fixation 156 assure un transfert des charges selon la direction longitudinale X.

Avec une telle installation, la fixation du réservoir 110a à la structure 112 est isostatique.

Pour des raisons de sécurité, la palette avant 202 et la palette arrière 302 sont doublées et constituées de deux sous-palettes disposées l'une derrière l'autre selon la direction longitudinale X et fixées l'une contre l'autre par tous moyens de fixation appropriés. Comme expliqué ci-dessus, pour chaque poutre 114a-b, la structure 112 comporte un arceau 113 où la poutre 114a-b est fixée horizontalement le long d'une corde dudit arceau 113. Pour chaque poutre 114a-b, l'aéronef 100 comporte une barre 120 en V dont la pointe est fixée de manière articulée à la poutre 114a-b, en particulier au niveau du milieu de ladite poutre 114a-b, c'est-à-dire au niveau du plan médian XZ de l'aéronef 100, et dont l'extrémité de chaque branche est fixée de manière articulée à l'arceau 113. Les extrémités des branches du la barre 120 sont disposées de part et d'autre du plan médian XZ de l'aéronef 100.

Les fixations de la barre 120 à la poutre 114a-b et à l'arceau 113 sont préférentiellement des liaisons rotule ou au moins des liaisons pivot autour d'un axe de rotation parallèle à la direction longitudinale X.

La barre 120 permet de limiter la flexion de la poutre 114a-b et d'assurer un transfert des efforts vers la structure du fuselage 102.

## Revendications

1. Aéronef (100) comportant :
- un fuselage (102) avec une structure (112),
- au moins un réservoir (110a-b) logé dans le fuselage (102), et présentant un plan médian longitudinal vertical,
- pour chaque réservoir (110a-b), des moyens de fixation (150) qui assurent la fixation du réservoir (110a-b) à la structure (112) où les moyens de fixation (150) comportent :
- un système avant de fixation (152) comportant :
- une palette avant (202) solidaire de la structure (112),
- de part et d'autre du plan médian longitudinal vertical du réservoir (110a-b), une bielle latérale (204a-b) fixée de manière articulée par un premier point de liaison (206, 210) à la palette avant (202) et par un deuxième point de liaison (208, 212) au réservoir (110a-b), et
- au niveau du plan médian longitudinal vertical du réservoir (110a-b), une bielle centrale (220) fixée de manière articulée par un premier point de liaison (222) à la palette avant (202) et de manière articulée par un deuxième point de liaison (224) au réservoir (110a-b),
- un système arrière de fixation (154) comportant :
- une palette arrière (302) solidaire de la structure (112), et
- une bielle arrière (304) fixée de manière articulée par un premier point de liaison (306) à la palette arrière (302) au niveau du plan médian longitudinal vertical du réservoir (110a-b) et au réservoir (110a-b) par deux deuxièmes points de liaison (308a-b) disposés de part et d'autre du plan médian longitudinal vertical du réservoir (110a-b), et
- un système latéral de fixation (156) comportant une bielle latérale (402) fixée de manière articulée par un premier point de liaison (406) à la structure (112) et par un deuxième point de liaison (408) au réservoir (110a-b) où l'un des points de liaison (406) est derrière l'autre point de liaison (408).

2. Aéronef (100) selon la revendication 1, **caractérisé en ce que** chaque bielle est doublée.

3. Aéronef (100) selon l'une des revendications 1 ou 2, **caractérisé en ce qu'**au moins une bielle latérale (204a) et la bielle centrale (220) du système avant de fixation (152) comportent un point de liaison supplémentaire (207, 223) entre la palette avant (202) et la bielle (204a, 220) considérée, où le point de liaison supplémentaire (207, 223) est activé en cas de défaillance d'un chemin primaire d'efforts et crée un chemin auxiliaire d'efforts entre la structure (112) et le réservoir (110a-b), et où chaque point de liaison supplémentaire (207, 223) est constitué d'une chape réalisée dans la bielle ou la paire de bielles (204a, 220) considérée et d'un axe emmanché dans des alésages de ladite chape et qui traverse un alésage de la palette avant (202) dont le diamètre est supérieur au diamètre de l'axe.

4. Aéronef (100) selon l'une des revendications 1 ou 2, **caractérisé en ce que** la bielle arrière (304) du système arrière de fixation (154) comporte un point de liaison supplémentaire (307) entre la bielle arrière (304) et le réservoir (110a-b), où le point de liaison supplémentaire (307) est activé en cas de défaillance d'un chemin primaire d'efforts et crée un chemin auxiliaire d'efforts entre la structure (112) et le réservoir (110a-b) et où le point de liaison supplémentaire (307) est constitué d'une chape réalisée dans la bielle arrière (304) ou la paire de bielles arrière (304) et d'un axe emmanché dans des alésages de ladite chape et qui traverse un alésage du réservoir (110a-b) dont le diamètre est supérieur au diamètre de l'axe.

5. Aéronef (100) selon l'une des revendications 1 à 4, **caractérisé en ce que** la palette avant (202) est doublée.

6. Aéronef (100) selon l'une des revendications 1 à 5, **caractérisé en ce que** la palette arrière (302) est doublée.

7. Aéronef (100) selon l'une des revendications 1 à 6, **caractérisé en ce que** chaque système avant de fixation (152) est fixé au niveau d'une poutre avant (114a) de la structure (112), **en ce que** chaque système arrière de fixation (154) est fixé au niveau d'une poutre arrière (114b) de la structure (112), **en ce que** pour chaque poutre (114a-b), la structure (112) comporte un arceau (113) où la poutre (114a-b) est fixée horizontalement le long d'une corde dudit arceau (113), et **en ce que**, pour chaque poutre (114a-b), l'aéronef (100) comporte une barre (120) en V dont la pointe est fixée de manière articulée à la poutre (114a-b) et dont l'extrémité de chaque branche est fixée de manière articulée à l'arceau (113).

## Patentansprüche

1. Flugzeug (100), umfassend:
- einen Rumpf (102) mit einer Struktur (112),
- mindestens einen Tank (110a-b), der in dem Rumpf (102) aufgenommen ist und eine vertikale Längsmittelebene aufweist,
- für jeden Tank (110a-b) Befestigungsmittel (150), die die Befestigung des Tanks (110a-b) an der Struktur (112) gewährleisten, wobei die Befestigungsmittel (150) umfassen:
- ein vorderes Befestigungssystem (152), umfassend:
- eine vordere Platte (202), die mit der Struktur (112) fest verbunden ist,
- beidseits der vertikalen Längsmittelebene des Tanks (110a-b) einen seitlichen Lenker (204a-b) der über eine erste Verbindungsstelle (206, 210) an die vordere Platte (202) und über eine zweite Verbindungsstelle (208, 212) an den Tank (110a-b) angelenkt ist, und
- an der vertikalen Längsmittelebene des Tanks (110ab) einen mittleren Lenker (220) der über eine erste Verbindungsstelle (222) an die vordere Platte (202) und über eine zweite Verbindungsstelle (224) an den Tank (110a-b) angelenkt ist,
- ein hinteres Befestigungssystem (154), umfassend:
- eine hintere Platte (302), die mit der Struktur (112) fest verbunden ist, und
- einen hinteren Lenker (304), der über eine erste Verbindungsstelle (306) an die hintere Platte (302) an der vertikalen Längsmittelebene des Tanks (110a-b) und an den Tank (110a-b) über zwei Verbindungsstellen (308ab), die beidseits der vertikalen Längsmittelebene des Tanks (110a-b) angeordnet sind, angelenkt ist, und
- ein seitliches Befestigungssystem (156), umfassend einen seitlichen Lenker (402), der über eine erste Verbindungsstelle (406) an die Struktur (112) und über eine zweite Verbindungsstelle (408) an den Tank (110a-b) angelenkt ist, wobei eine der Verbindungsstellen (406) hinter der anderen Verbindungsstelle (408) ist.

2. Flugzeug (100) Anspruch 1, **dadurch gekennzeichnet, dass** jeder Lenker gedoppelt ist.

3. Flugzeug (100) nach einem der Ansprüche 1 oder 2, **dadurch gekennzeichnet, dass** mindestens ein seitlicher Lenker (204a) und der mittlere Lenker (220) des vorderen Befestigungssystems (152) eine zusätzliche Verbindungsstelle (207, 223) zwischen der vorderen Platte (202) und dem betrachteten Lenker (204a, 220) umfassen, wobei die zusätzliche Verbindungsstelle (207, 223) im Fall des Versagens eines primären Kraftwegs aktiviert wird und einen Hilfskraftweg zwischen der Struktur (112) und dem Tank (110a-b) schafft, und wobei jede zusätzliche Verbindungsstelle (207, 223) aus einem Gabelkopf, der in dem betrachteten Lenker oder Lenkerpaar (204a, 220) ausgeführt ist, und aus einem Bolzen, der in Bohrungen des Gabelkopfes eingeführt ist und der eine Bohrung der vorderen Platte (202) durchdringt, deren Durchmesser größer als der Durchmesser des Bolzens ist, besteht.

4. Flugzeug (100) nach einem der Ansprüche 1 oder 2, **dadurch gekennzeichnet, dass** der hintere Lenker (304) des hinteren Befestigungssystems (154) eine zusätzliche Verbindungsstelle (307) zwischen dem hinteren Lenker (304) und dem Tank (110a-b) umfasst, wobei die zusätzliche Verbindungsstelle (307) im Fall des Versagens eines primären Kraftwegs aktiviert wird und einen Hilfskraftweg zwischen der Struktur (112) und dem Tank (110a-b) schafft, und wobei die zusätzliche Verbindungsstelle (307) aus einem Gabelkopf, der in dem hinteren Lenker (304) oder dem hinteren Lenkerpaar (304) ausgeführt ist, und aus einem Bolzen, der in Bohrungen des Gabelkopfes eingeführt ist und der eine Bohrung des Tanks (110a-b) durchdringt, deren Durchmesser größer als der Durchmesser des Bolzens ist, besteht.

5. Flugzeug (100) nach einem der Ansprüche 1 bis 4, **dadurch gekennzeichnet, dass** die vordere Platte (202) gedoppelt ist.

6. Flugzeug (100) nach einem der Ansprüche 1 bis 5, **dadurch gekennzeichnet, dass** die hintere Platte (302) gedoppelt ist.

7. Flugzeug (100) nach einem der Ansprüche 1 bis 6, **dadurch gekennzeichnet, dass** jedes vordere Befestigungssystem (152) an einem vorderen Träger (114a) der Struktur (112) befestigt ist, dass jedes hintere Befestigungssystem (154) an einem hinteren Träger (114b) der Struktur (112) befestigt ist, dass die Struktur (112) für jeden Träger (114a-b) einen Bogen (113) umfasst, wobei der Träger (114a-b) horizontal entlang einer Sehne des Bogens (113) befestigt ist, und dass das Flugzeug (100) für jeden Träger (114a-b) eine V-förmige Stange (120) umfasst, deren Spitze an den Träger (114a-b) angelenkt ist und deren Ende jedes Schenkels an den Bogen (113) angelenkt ist.

## Claims

1. Aircraft (100) comprising:
- a fuselage (102) with a structure (112),
- at least one tank (110a-b) housed in the fuselage (102), and having a vertical longitudinal median plane,
- for each tank (110a-b), fastening means (150) which fasten the tank (110a-b) to the structure (112), wherein the fastening means (150) comprise:
- a front fastening system (152) comprising:
- a front plate (202) secured to the structure (112),
- on either side of the vertical longitudinal median plane of the tank (110a-b), a lateral connecting rod (204a-b) fastened in an articulated manner to the front plate (202) by a first connection point (206, 210) and to the tank (110a-b) by a second connection point (208, 212), and
- at the vertical longitudinal median plane of the tank (110a-b), a central connecting rod (220) fastened in an articulated manner to the front plate (202) by a first connection point (222) and in an articulated manner to the tank (110a-b) by a second connection point (224),
- a rear fastening system (154) comprising:
- a rear plate (302) secured to the structure (112), and
- a rear connecting rod (304) fastened in an articulated manner to the rear plate (302) by a first connection point (306) at the vertical longitudinal median plane of the tank (110a-b) and to the tank (110a-b) by two second connection points (308a-b) that are disposed on either side of the vertical longitudinal median plane of the tank (110a-b), and
- a lateral fastening system (156) comprising a lateral connecting rod (402) fastened in an articulated manner to the structure (112) by a first connection point (406) and to the tank (110a-b) by a second connection point (408), wherein one of the connection points (406) is behind the other connection point (408).

2. Aircraft (100) according to Claim 1, **characterized in that** each connecting rod is doubled.

3. Aircraft (100) according to either of Claims 1 and 2, **characterized in that** at least one lateral connecting rod (204a) and the central connecting rod (220) of the front fastening system (152) comprise an additional connection point (207, 223) between the front plate (202) and the connecting rod (204a, 220) considered, wherein the additional connection point (207, 223) is activated in the event of failure of a primary force path and creates an auxiliary force path between the structure (112) and the tank (110a-b), and wherein each additional connection point (207, 223) is made up of a clevis realized in the connecting rod or the pair of connecting rods (204a, 220) considered and of a pin which is fitted into bores in said clevis and which passes through a bore in the front plate (202), the diameter of said bore being greater than the diameter of the pin.

4. Aircraft (100) according to either of Claims 1 and 2, **characterized in that** the rear connecting rod (304) of the rear fastening system (154) comprises an additional connection point (307) between the rear connecting rod (304) and the tank (110a-b), wherein the additional connection point (307) is activated in the event of failure of a primary force path and creates an auxiliary force path between the structure (112) and the tank (110a-b), and wherein the additional connection point (307) is made up of a clevis realized in the rear connecting rod (304) or the pair of rear connecting rods (304) and of a pin which is fitted into bores in said clevis and which passes through a bore in the tank (110a-b), the diameter thereof being greater than the diameter of the pin.

5. Aircraft (100) according to one of Claims 1 to 4, **characterized in that** the front plate (202) is doubled.

6. Aircraft (100) according to one of Claims 1 to 5, **characterized in that** the rear plate (302) is doubled.

7. Aircraft (100) according to one of Claims 1 to 6, **characterized in that** each front fastening system (152) is fastened to a front beam (114a) of the structure (112), **in that** each rear fastening system (154) is fastened to a rear beam (114b) of the structure (112), **in that**, for each beam (114a-b), the structure (112) comprises a hoop (113), wherein the beam (114a-b) is fastened horizontally along a chord of said hoop (113), and **in that**, for each beam (114a-b), the aircraft (100) comprises a V-shaped bar (120), the tip thereof being fastened in an articulated manner to the beam (114a-b) and the end of each arm thereof being fastened in an articulated manner to the hoop (113).
